# EUROPÄISCHE PATENTSCHRIFT

(11) **EP 1 346 813 B1**
(45) Veröffentlichungstag und Bekanntmachung des Hinweises auf die Patenterteilung: **04.05.2011**
(21) Anmeldenummer: 03005784.8
(22) Anmeldetag: 14.03.2003
(51) Int. Cl.: B29C 47/88

(54) **Folienblaskopf und Verfahren zur Extrusion eines Schlauches**
Blown film die and method for extruding a tubular film
Tête de soufflage de film et procédé pour l'extrusion d'un film tubulaire

(30) Priorität: 19.03.2002 DE 10211963
(43) Veröffentlichungstag der Anmeldung: 24.09.2003
(73) Patentinhaber: Lübke, Frank, 65510 Idstein-Walsdorf (DE)
(72) Erfinder: Lübke, Frank, 65510 Idstein-Walsdorf (DE)
(74) Vertreter: Körner, Volkmar Horst

(56) Entgegenhaltungen:
- EP-A- 0 595 037
- CH-A- 515 795
- PATENT ABSTRACTS OF JAPAN vol. 012, no. 116 (M-684), 13. April 1988 (1988-04-13) & JP 62 244611 A (TOSHIBA MACH CO LTD), 26. Oktober 1987 (1987-10-26)

## Beschreibung

Die Erfindung betrifft einen Folienblaskopf zur Extrusion eines Schlauches aus einer thermoplastischen Kunststoffschmelze mit einer zentralen Durchgangsöffnung für Kühlluft zur Blaseninnenkühlung, mit mindestens einer, mit ihrer Blasrichtung im Wesentlichen gegen die Kunststoffschmelze am Werkzeugaustritt gerichteten Kühllippe und mit einer Warmluftabsaugung aus dem erzeugten Schlauch, mit einem zentralen Rohr zur Führung der Kühlluft und einem Ringkanal zur Führung von angewärmter Abluft, wobei der Ringkanal von dem zentralen Rohr und einem das zentrale Rohr umschließenden Rohr gebildet ist und mit einem Luftverteiler. Weiterhin betrifft die Erfindung ein Verfahren zur Extrusion eines Schlauches aus einer thermoplastischen Kunststoffschmelze mit einem Folienblaskopf, wobei Kühlluft zunächst über einen zentralen Kanal einem Luftverteiler und anschließend Blaslippen zugeführt wird und angewärmte Abluft einem dem zentralen Kanal umschließenden Ringkanal zugeführt wird, gemäß dem Oberbegriff des Anspruchs 1.

Ein solcher Folienblaskopf und ein solches Verfahren sind aus der CH 515 795 bekannt. Hierbei wird der erzeugte Schlauch über einen außerhalb des Schlauchs angeordneten Kühlring von außen und über die Kühllippen von innen angeblasen. Die Innenluft wird unterhalb der Kühllippe über den Ringkanal abgesaugt. Dies erzeugt jedoch bei höheren Kühlleistungen häufig einen Venturi-Effekt und führt somit zu einer instabilen Folienblase. Solche Blaseninstabilitäten führen zu einer geringen Extrusionsleistung und einer inhomogenen Wandstärke der Folie.

Aus der DE 28 14 283 A1 ist eine Vorrichtung zur Erzeugung einer Schlauchfolie bekannt, bei der zunächst Kühlluft in einem von dem Blaswerkzeug begrenzten Ringkanal zugeführt wird. Damit wird zunächst das Werkzeug, welches die Kunststoffschmelze in einem Ringkanal führt, gekühlt. Hierdurch wird Wärmeenergie dem Werkzeug entzogen, was einen hohen Energieaufwand zur Erzeugung der Schlauchfolie zur Folge hat. Zudem kann die Kühlung des Werkzeuges ungleichmäßige Wandstärken der Schlauchfolie zur Folge haben. Die Kühlluft gelangt anschließend über konzentrische Rohre zu mehreren, hintereinander angeordneten Blasdüsen. Die konzentrischen Rohre vermögen die Luft nicht über den Umfang gleichmäßig zu verteilen, was ebenfalls ungleichmäßige Anblasgeschwindigkeiten und damit eine ungleichmäßige Wandstärke der erzeugten Schlauchfolie zur Folge hat.

Die EP 595 037 A1, zeigt einen Blaskopf mit einer Außenkühlringscheibe. Der dort dargestellte Innenluftaustausch erlaubt kein direktes Anblasen der Folienblase am Düsenaustritt und führt somit zu einer geringen Extrusionsleistung des Folienblaskopfes.

Der Erfindung liegt das Problem zugrunde, einen Folienblaskopf so weiterzubilden, dass er einen möglichst geringen Energieaufwand hat und eine besonders hohe Gleichmäßigkeit der erzeugten Schlauchfolie gewährleistet. Weiterhin soll ein Verfahren zur Extrusion eines Schlauches geschaffen werden, welches besonders hohe Extrusionsleistungen bei hoher Gleichmäßigkeit der erzeugten Folie gewährleistet.

Das erstgenannte Problem wird erfindungsgemäß dadurch gelöst, dass die Kühllippen den Ringkanal konzentrisch umschließen, dass der Luftverteiler entgegen der Extrusionsrichtung gesehen vor den Kühllippen angeordnet ist, und das zentrale Rohr mit den Kühllippen sowie die Innenseite des erzeugten Schlauchs zur Abführung der Warmluft der Warmluftabsaugung mit dem Ringkanal verbindet, gemäß dem kennzeichnenden Teil des Anspruchs 1.

Durch diese Gestaltung werden zwei Strömungen, die Führung der Kühlluft zu den Kühllippen und die Absaugung der Warmluft aus dem erzeugten Schlauch, über Kreuz geführt. Damit wird vermieden, dass kalte Kühlluft das Werkzeug kühlt. Der erfindungsgemäße Folienblaskopf erfordert daher einen besonders geringen Energieaufwand. Der für die Kreuzung der Strömungen erforderliche Luftverteiler ist im Bereich der erzeugten Blase angeordnet. In diesem Bereich ist ausreichend Bauraum vorhanden, um die Strömungen der Luft zu verteilen und möglichst gleichmäßig den Kühllippen zuzuführen. Dies führt zu einer besonders hohen Gleichmäßigkeit der erzeugten Schlauchfolie.

Vorteilhafte Weiterbildungen der Erfindung sind in den Unteransprüchen beschrieben.

Das zweitgenannte Problem, nämlich die Schaffung eines Verfahrens zur Extrusion, mit welchem besonders hohe Extrusionsleistungen bei hoher Gleichmäßigkeit der erzeugten Folie gewährleistet wird, wird erfindungsgemäß dadurch gelöst, dass Kühlluft zunächst über einen zentralen Kanal einem Luftverteiler und anschließend entgegen der Extrusionsrichtung Kühllippen zugeführt wird und dass angewärmte Abluft einem dem zentralen Kanal umschließenden Ringkanal zugeführt wird.

Mit dem erfindungsgemäßen Verfahren lässt sich die aus den Kühllippen austretende Luft in Extrusionsrichtung absaugen. Damit wird eine gleichmäßige Anströmung des Schlauches sichergestellt und große Strömungsgeschwindigkeiten von dem erzeugten Schlauch ferngehalten.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: einen erfindungsgemäßen Folienblaskopf,
- Fig.2: eine weitere Ausführungsform des erfindungs- gemäßen Folienblaskopfs mit einem Rohr zur Warmluftabsaugung,
- Fig.3: eine weitere Ausführungsform des erfindungs- gemäßen Folienblaskopfs mit gerader Warm- luftabsaugung.

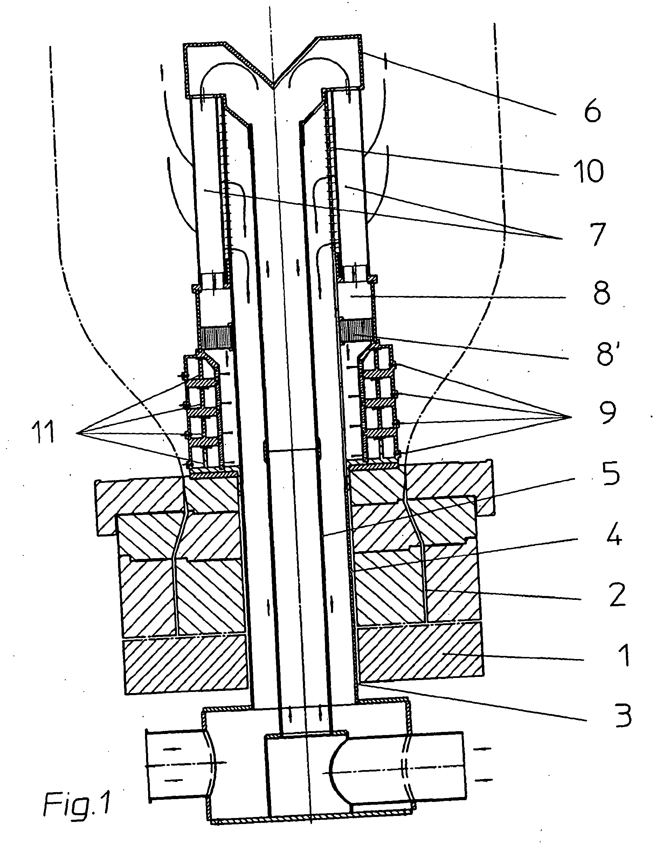

Figur 1 zeigt einen Folienblaskopf 1 mit einem ringförmigen Schmelzkanal 2 zur Erzeugung eines Schlauches. Zur Verdeutlichung ist in der Zeichnung der Schlauch strichpunktiert dargestellt. Zwei einander konzentrisch umschließende Rohre 4, 5 sind durch eine zentrale Öffnung 3 des Folienblaskopfs 1 geführt. Das innere Rohr 5 dient zur Führung einer Kühlluft zu einem Luftverteiler 6. Ein von den konzentrischen Rohren 4, 5 gebildeter Ringkanal ist mit dem inneren Bereich des Schlauches oberhalb des Luftverteilers 6 verbunden. Der Luftverteiler 6 führt die Luft aus dem zentralen Rohr 5 über Schläuche 7 einer Vergleichmäßigungseinrichtung 8 mit einem Waben- oder Lamelleneinsatz 8' zu. Von der Vergleichmäßigungseinrichtung 8 gelangt die Kühlluft über querstehende Lamellen 11 zu Kühllippen 9. Die Vergleichmäßigungseinrichtung 8 und die Lamellen 11 stellen eine gleichmäßige Luftströmung an den Kühllippen 9 sicher. Aus dem Schlauch abgesaugte Warmluft gelangt an den Schläuchen 7 des Luftverteilers 6 vorbei in den von den Rohren 4, 5 gebildeten Ringkanal. Vor dem Ringkanal ist zudem ein Lochblech 10 angeordnet.

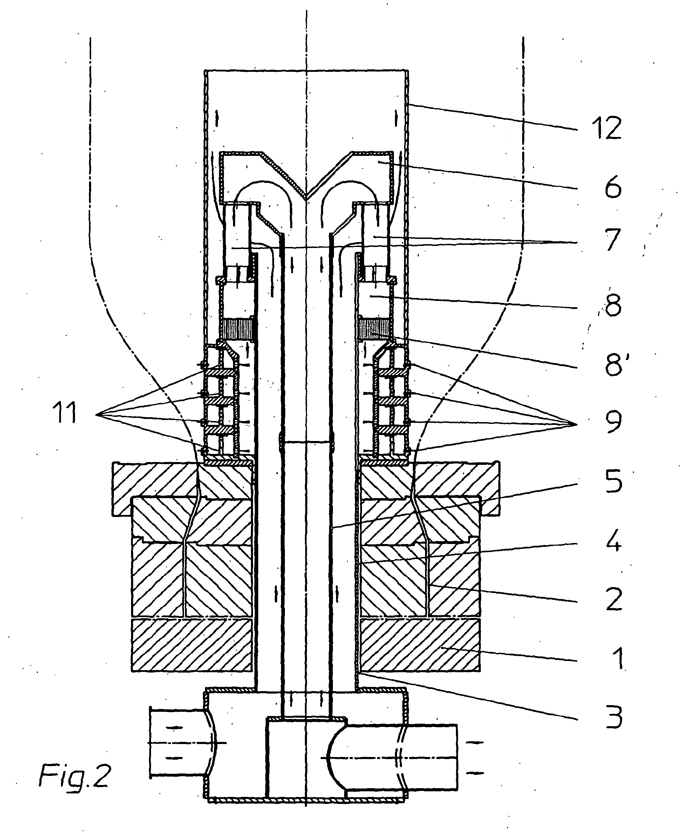

Figur 2 zeigt eine weitere Ausführungsform des Folienblaskopfs, welcher sich von dem aus Figur 1 dadurch unterscheidet, dass die Absaugung der Warmluft aus dem Schlauch über ein Mantelrohr 12 erfolgt. Ein Ende des Mantelrohrs 12 ragt in den erzeugten Schlauch, während das andere Ende mit dem von den Rohren 4, 5 gebildeten Ringkanal verbunden ist.

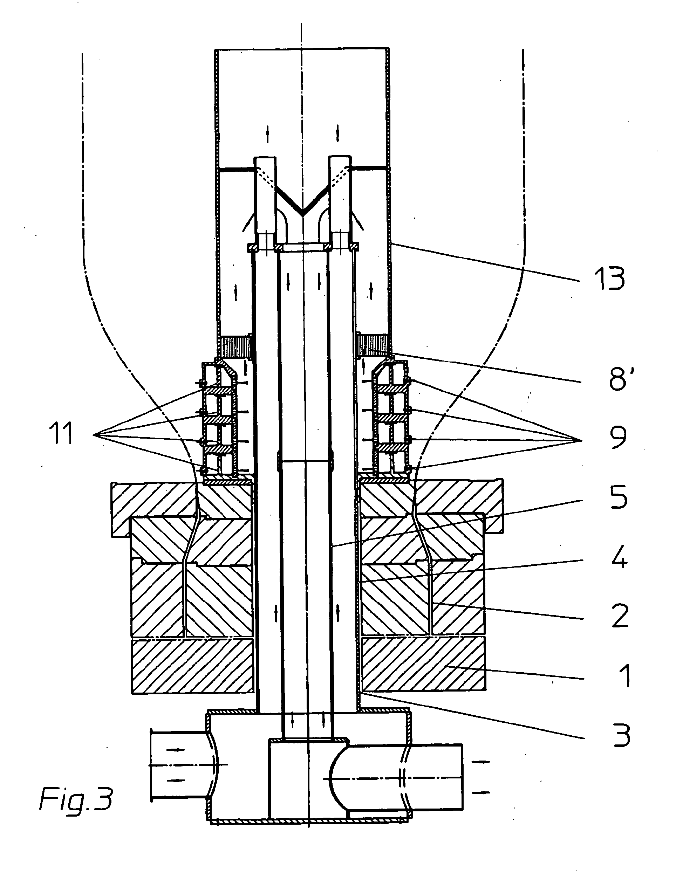

Figur 3 zeigt eine weitere Ausführungsform des Folienblaskopfs, bei dem aus dem Schlauch abgesaugte Warmluft auf geradem Wege dem von den Rohren 4, 5 gebildeten Ringkanal zugeführt wird. Weiterhin hat der Luftverteiler ein Mantelrohr 13, welches die Kühlluft des zentralen Rohres 5 zu den Kühllippen 9 führt.

## Patentansprüche

1. Folienblaskopf (1) zur Extrusion eines Schlauches aus einer thermoplastischen Kunststoffschmelze mit einer zentralen Durchgangsöffnung für Kühlluft zur Blaseninnenkühlung, mit mindestens einer, mit ihrer Blasrichtung im Wesentlichen gegen die Kunststoffschmelze am Werkzeugaustritt gerichteten Kühllippe (9) und mit einer Warmluftabsaugung aus dem erzeugten Schlauch, mit einem zentralen Rohr (5) zur Führung der Kühlluft und einem Ringkanal zur Führung von angewärmter Abluft, wobei der Ringkanal von dem zentralen Rohr und einem das zentrale Rohr (5)umschließenden Rohr (4) gebildet ist und mit einem Luftverteiler, **dadurch gekennzeichnet, dass** die Kühllippen (9) den Ringkanal konzentrisch umschließen, dass entgegen der Extrusionsrichtung gesehen vor den Kühllippen (9) ein Luftverteiler (6) angeordnet ist, welcher das zentrale Rohr (5) mit den Kühllippen (9) und die Innenseite des erzeugten Schlauchs zur Abführung der Warmluft der Warmluftabsaugung mit dem Ringkanal verbindet.

2. Folienblaskopf nach Anspruch 1, **dadurch gekennzeichnet, dass** entgegen der Extrusionsrichtung vor den Kühllippen (9) eine Vergleichmäßigungseinrichtung (8) angeordnet ist und dass der Luftverteiler (6) mit der Vergleichmäßigungseinrichtung (8) über Schläuche (7) oder Rohre verbunden ist, wobei die Schläuche (7) oder Rohre einen Abstand zueinander aufweisen.

3. Folienblaskopf nach Anspruch 1 oder 2, **dadurch gekennzeichnet, dass** die Schläuche (7) oder Rohre parallel zur Extrusionsrichtung geführt sind.

4. Folienblaskopf nach zumindest einem der vorhergehenden Ansprüche, **dadurch gekennzeichnet, dass** entgegen der Extrusionsrichtung gesehen vor dem Ringkanal ein Lochblech (10) angeordnet ist.

5. Folienblaskopf nach zumindest einem der vorhergehenden Ansprüche, **dadurch gekennzeichnet, dass** ein Mantelrohr (12) ein in dem zu erzeugenden Schlauch weisendes Ende hat und dass das zweite Ende des Mantelrohres (12) mit dem von den Rohren 4, 5) gebildeten Ringkanal verbunden ist.

6. Verfahren zur Extrusion eines Schlauches aus einer thermoplastischen Kunststoffschmelze mit einem Folienblaskopf nach einem der vorhergehenden Ansprüche, **dadurch gekennzeichnet, dass** Kühlluft zunächst über einen zentralen Kanal einem Luftverteiler und anschließend entgegen der Extrusionsrichtung Kühllippen zugeführt wird und angewärmte Abluft einem dem zentralen Kanal umschließenden Ringkanal zugeführt wird.

## Claims

1. Blown film die (1) for the extrusion of a hose from a thermoplastic plastic melt with a central through-opening for cooling air used for internal bubble cooling, with at least a single cooling fin (9) that has its blow direction primarily pointed against the plastic melt at the tool exit and a hot-air exhaust to extract hot air from the created hose, with a central tube (5) to conduct cooling air and an annular channel to conduct preheated exhaust air whereby the annular channel is formed by a central tube and a tube (4) enclosing the central tube (5) and an air diffuser that is **characterized by** cooling fins (9) concentrically enclosing the annular channel, by an air diffuser (6) located prior to the cooling fins (9) when viewed against the extrusion direction (9) that connects the central tube (5) with the cooling fins (9) and the inner side of the created tube with the annular channel to remove hot air from the hot-air exhaust.

2. Blown film die according to claim 1 **characterized by** an equalisation device (8) located prior to the cooling fins (9) when viewed against the extrusion direction and an air diffuser (6) connected with the equalisation device (8) by tubes (7) or pipes whereby the tubes (7) or pipes are spaced out.

3. Blown film die according to claim 1 or 2, **characterized by** tubes (7) or pipes located parallel to the extrusion direction.

4. Blown film die according to at least one of the previous claims **characterized by** a perforated sheet (10) located prior to the annular channel when viewed against the extrusion direction.

5. Blown film die according to at least one of the previous claims **characterized by** a casing tube (12) pointing one end into the tube to be created and connecting the other end of the casing tube with the annular channel formed by the pipes (4, 5).

6. Process for the extrusion of a tube from a thermoplastic plastic melt with a blown film die according to one of the previous claims **characterized by** cooling air initially fed into an air diffuser via a central channel and subsequently fed into cooling fins against the extrusion direction and preheated exhaust air fed into an annular channel surrounding the central channel.

## Revendications

1. Tête de soufflage de films (1) pour l'extrusion d'un tube à partir d'une masse thermoplastique fondue avec une ouverture de passage centrale pour l'air de refroidissement pour le refroidissement interne par soufflage, avec au moins une lèvre de refroidissement (9), soufflant essentiellement en direction du plastique fondu à la sortie de l'outil et avec une aspiration d'air chaud du tube fabriqué, avec un tube central (5) de guidage de l'air de refroidissement et un canal annulaire de guidage de l'air chauffé, pour lequel le canal annulaire est formé du tube central et d'un tube enveloppant (4) le tube central (5) et avec un diffuseur d'air, **caractérisée en ce que** les lèvres de refroidissement (9) enveloppent le canal annulaire de manière concentrique, que, face à la direction d'extrusion, un diffuseur d'air (6) est situé devant les lèvres de refroidissement (9), qui relie le tube central (5) avec les lèvres de refroidissement (9) et relie l'intérieur du tube fabriqué avec le canal annulaire pour dissiper l'air chaud du système d'aspiration d'air chaud.

2. Tête de soufflage de films selon la revendication 1, **caractérisée en ce qu'**un dispositif pour réguler la diffusion (8) est placé dans le sens opposé à la direction d'extrusion devant les lèvres de refroidissement (9) et que le diffuseur d'air (6) est relié avec le dispositif pour réguler la diffusion (8) par des tubes ou des tuyaux (7) séparés les uns des autres par une distance.

3. Tête de soufflage de films selon la revendication 1 ou 2, **caractérisée en ce que** les tuyaux (7) ou les tubes sont parallèles à la direction d'extrusion.

4. Tête de soufflage de films selon au moins l'une des revendications précédentes, **caractérisée en ce qu'**une plaque perforée (10) est disposée devant le canal annulaire, dans le sens opposé à la direction d'extrusion.

5. Tête de soufflage de films selon au moins l'une des revendications précédentes, **caractérisée en ce qu'**un tube à gaine (12) a une extrémité en direction du tuyau à générer et que la seconde extrémité du tube à gaine (12) est reliée avec le canal annulaire formé par les tubes (4, 5).

6. Processus d'extrusion d'un tube à partir d'une masse thermoplastique fondue avec une tête de soufflage de films selon l'une des revendications précédentes, **caractérisé en ce que** l'air de refroidissement est d'abord conduit par un canal central vers un diffuseur d'air et ensuite, dans le sens opposé à la direction d'extrusion, vers des lèvres de refroidissement et l'air chauffé est conduit vers un canal annulaire enveloppant le canal central.
